(19) **Europäisches Patentamt**
**European Patent Office**
**Office européen des brevets**

(11) **EP 2 278 738 B1**

(12) **EUROPEAN PATENT SPECIFICATION**

(45) Date of publication and mention
of the grant of the patent:
**21.09.2011 Bulletin 2011/38**

(51) Int Cl.:
*H04J 3/14* (2006.01)        *H04J 3/16* (2006.01)
*H04L 12/26* (2006.01)

(21) Application number: **09305624.0**

(22) Date of filing: **30.06.2009**

(54) **Method and apparatus for line latency measurement in transport networks**

Verfahren und Vorrichtung zur Leitungslatenzmessung in Transportnetzwerken

Procédé et appareil pour la mesure du délai de ligne dans des réseaux de transport

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**26.01.2011 Bulletin 2011/04**

(73) Proprietor: **Alcatel Lucent
75008 Paris (FR)**

(72) Inventors:
• **Ansorge, Stefan
73275, Ohmden (DE)**

• **Beilharz, Siegfried
71404, Korb (DE)**

(74) Representative: **Urlichs, Stefan
Alcatel Lucent
Intellectual Property & Corporate Standards
Lorenzstrasse 10
70435 Stuttgart (DE)**

(56) References cited:
**WO-A-03/063396         WO-A-2004/068750
JP-A- 2000 332 715    US-A1- 2005 265 251
US-B1- 6 545 979**

EP 2 278 738 B1

**Description**

**Field of the Invention**

The present invention relates to the field of telecommunications and more particularly to a method and related apparatus for measuring the latency of a line in a transport network.

**Background of the Invention**

Latency requirements are a hard constraint for packet-based service. Such packet based services can be transported through transport networks like SDH/SONET/OTN of WDM networks. Transport network should therefore be aware of latency. Especially in the contest of protection switching and restoration, latency for an end-to-end packet service may change and hence result in service degradation or failure on the packet layer. Therefore transport services shall not exceed a maximum latency.

The latency of a transport service is based on switch time through nodes and the line length. The end-to-end latency is then given by the number of switching nodes multiplied by the switching time per node plus the latency of the sum line lengths.

The line length is typically not known, or if so, is known only roughly. The line length latency hence cannot be simply calculated from the light speed and fiber length. An additional impact on line length latency comes from intermediate transparent nodes like repeaters or WDM equipment introducing their own latency. So latency is not just given by the cable length and the speed of light in a media but other unknown components must be considered as well.

US 2005/0265251 describes a method for determining a link delay using a virtual concatenation group , where two members of a virtually-concatenated group (VCG) are routed on opposite sides of a logical ring. For a given one of these two-member VCGs, a differential delay measurement is made at a particular one of the associated nodes by comparing frame indicator fields for concurrently arriving frames.

WO 2004/068750 describes a method for measuring delay between a main base station and a remote base station interconnected by an optical cable, where the main base station inserts a test pattern into an overhead part of an SDH frame to transmit the SDH frame to the remote base station, receives the SDH frame looped back by the remote base station to detect the test pattern, and measures propagation delay according to the test pattern.

WO03/06339 describes a method for measuring differential delay in a SONET/SDH-system using virtual concatenation. Differential delay affecting data communicated through a communications system is measured by generating a test data signal simulating differential delay. The test data signal traverses communications equipment under test, and the data signal is monitored as it is output from the communications equipment to derive an indication of differential delay.

JP 2000-33271 describes a system that measures a round-trip time between nodes of SDH transmission using a specific byte of an overhead of a frame to start and stop counters in the transmitting and receiving nodes and return a count value back to the transmitting node.

US6545979 describes a method for calculating round trip delay values in a switched digital network such as an asynchronous transfer mode network. A loopback cell such as an ATM operation and maintenance cell is used to carry a delta value through the network. The delta value, which represents a processing interval at a loopback node or an intermediate node, is calculated utilizing timestamps generated at specific ingress and egress ports of network nodes. Cell Transfer Delay and Cell Delay Variations values are calculated based on the measured round trip delay.

**Summary of the Invention**

The inventors have recognized a need for end-to-end latency measurements in transport networks such as SDH/SONET. In transport networks, latency measurement on a given link or line is typically not available today. Either a test generator must be embedded into the system or an external measurement device must be provided. Neither is generally available today. It is hence an object of the present invention, to provide a method and related apparatus that allows to measure the latency of a particular transport service from end to end, that is compatible with existing equipment.

These and other objects that appear below are achieved by a method of measuring the latency of a transport connection between a first network node and a second network node, which makes use of a virtual concatenation function with a buffer to compensate the differential delay between members in a received virtual concatenation group. In particular, the first network node creates a virtual concatenation group which has at least two multiplexing units. A first of the two is used as a reference for the latency measurement. The second is sent to the second network node, where it is looped back to said first network node. The first network node switches the first multiplexing unit internally back to a line card, where the virtual concatenation group is terminated and, by using its buffer available for re-aligning members of a virtual concatenation group, determines a latency difference between the first and second multiplexing units.

**Brief Description of the Drawing**

Preferred embodiments of the present invention will new be described with reference to the accompanying drawings in which

figure 1    shows a network node of a transport network performing end-to- end latency measurement to a far end network node;

figure 2    shows a timing diagram of the latency measurement in figure 1;

figure 3    shows a second embodiment of a network node performing end- to-end latency measurement to a far end network node;

figure 4    shows a timing diagram of the latency measurement in figure 3;

figure 5    shows a third embodiment of a latency measurement of a line and segments thereof; and

figure 6    shows a fourth embodiment where multiply lines are measured in parallel.

**Detailed Description of the Invention**

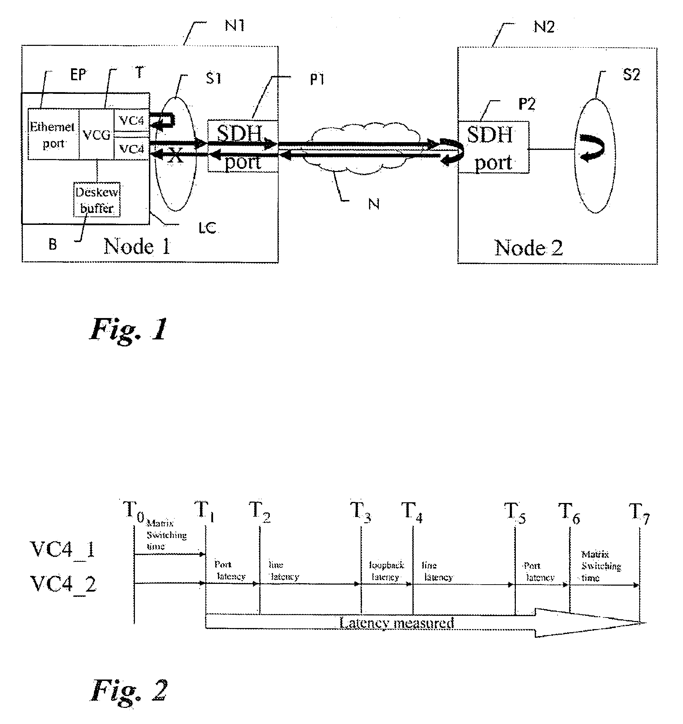

The inventors have provided a mechanism to measure a line latency, which makes use of functions already available in existing network nodes, in particular of the virtual concatenation function in SDH/SONET, OTN or WDM.
in SDH networks, transport signals are structured into frames of equal length, which are termed Synchronous Transport Modules of type N (STM-N), where N can be 1, 4, 16, 64, 256, or even higher. An STM-N carries multiplexing units, which are termed virtual containers (VC). The largest VC is the VC4 with a capacity of 140 MBit/s. An STM-1 carries one VC4, an STM-4 four VC4s and so on. These VCs transport client signals, which are termed tributaries. In order to provide larger transport capacity, two or more VCs can be linked. This is called a concatenation of VCs. In a contiguous concatenation, all concatenated VCs must be transported within the same STM-N, while in a virtual concatenation, the VCs can be transported independency and are reassembled at the terminating network node. Since the VCs can be transported independently from each other even over different network paths, they can experience different latency and hence a buffer must be provided at the terminating network node to compensate for the skew between the Individual VCs. This buffer is termed hereinafter the deskewing buffer.
The deskewing buffer bases on a common synchronization frame that is inserted for all members at the some time and verified at the sink side. The differential delay can therefore be measured.
An idea of the inventors is to make use of the deskewing buffers for virtual concatenated signals, which are anyhow present on tributary line cards for packet services of existing network nodes. Therefore, in a first embodiment, one member of a virtual concatenation is locally looped back while a second member is passed across a link under consideration. The link under consideration is line jeep-backed on the far-end network node and switched to the some virtual concatenation group the first member is located. The latency between the two members equals roughly twice the line latency to be measured. This allows line latency measurement without requiring any external measurement devices.
The latency measurement of first embodiment is shown schematically in figure 1. A first network node N1 contains a line card LC for tributary signals, a switch matrix S1 and at least one out put port P1 connected to an SDH network. N. The tributary line card LC contains an Ethernet port EP for Ethernet client signals and a Concatenation termination unit T. The concatenation termination unit T is connected to *a deskewing buffer B. The tributary line card is connected to the switching matrix S1. The switching matrix S1 switches multiplexing units at a granularity of VC4. A transmission connection is established from network node N1 through the SDH network N to a far-end germinating network node N2. Network node N2 has an SDH port P2 and a switching matrix S2.
Figure 1 shows the network nodes N1 and N2 in a simplifies way and only those building blocks are shown which are used in the present embodiment for the latency measurement. It should be clear however, that real network nodes will have many more and also different kind of interlaces and will include further functional blocks such as lower level and higher level controllers, supervisory and management functions, signaling and management interfaces and many more.
The measurement setup is done in the following way:

-    Two members of a virtual concatenation group VCG are used and compares.
-    One member is locally switched back to the VCG. group using a unidirectional cross connection.
-    The second member is switched to the port under consideration.

The peer end of the port is placed into line loopback, when the link is not in service. Alternatively the VCG member can be locally switched back to the line in the switching matrix S2.

In particular, concatenation termination units T creates a virtual concatenation of two VC4s, i.e. a VC4-2v. The two concatenated virtual containers VC4 are send to the switch matrix S1. The first of the two VC4s is switched back by the switching matrix S1 to the some tributary line card LC, where it is stored in the deskewing buffer B. The second VC4 is switched from switching matrix S1 to SDH port P1 and transmitted through the SDH network N to network node N2. At network node N2, the second VC4 is received of SDH port P2. In SDH port P2, a line loopback function is activated to switch the second VC4 back to the line. Hence, the second VC4 is transmitted the same way back through network. N to node N1, where it is received at the same port P1. From P1, the second VC4 is switched through switching matrix S1 back to tributary line card LC, where it is received at concatenation termination unit T. Concatenation termination unit T compares the latency of the first and second virtual containers to determine the latency of the line under consideration.

Figure 2 shows a timing diagram of the two virtual containers VC4_1 VC4_2. Both VC4 VC4_1 and VC4_2 are sent at the same time $T_0$ from tributary line card LC to switching matrix S1. Switching matrix S1 has a certain latency, which is typically the same for all signals to be switched. Hence, VC4_1 is received at time $T_1$ back at the tributary line card LC and VC4_2 is received at the some timer T1 at SDH part P1. SDH port P1 performs some processing and overhead termination functions, which introduce a port latency, At time $T_2$, VC4_2 is sent to the transmission line. The transmission line add a certain line latency and VC4_2 is received at time $T_3$ at port P2 of network node N2. The loopback function adds a certain latency so that VC4_2 is sent at time $T_4$ back to the transmission line under consideration. The line latency is then added a second time for the way back and VC4_2 is received at time $T_5$ at port P1 of node N1. Port P1 adds again the port latency and switching matrix S1 adds the switching matrix latence, so that VC4_2 is received at time $T_7$ back at tributary line card LC. The time difference from $T_1$ till $T_7$ is the measured latency value.

Using typical, known latency values for the real line latency can be estimated therefrom. The switching time $T_1$, $T_7$ through the switching matrix S1 is roughly 15 $\mu$s. The port latency $T_2$ on the egress side is roughly 5 $\mu$s. $T_3$, $T_5$ is the line latency. The loopback latency $T_4$, is very small, roughly a. few $\mu$s. The port latency $T_6$ at ingress side is again roughly 5 $\mu$s. Thus the line latency can be calculated by

$$\text{Line latency} = ((T7 - T1 \text{ measurement}) - (T2 + T6 + T7 + T4)) / 2$$
$$\approx ((T7 - T1 \text{ measurement}) - 20 \ \mu s)/2$$

The above measurement method is compatible with nearly all existing equipment. Virtual concatenation is available on GE, 10GE and other tributary line cards for packet services These cards provide also the measurement of differential delay. The granularity that can be measured in SDH frames is 125 $\mu$s. The maximum range depends on the size of the deskewing buffer, which is for IGE typically 15 ms, which corresponds to 120 frames and for TOGE Ethernet/ MPLS tributary line cards typically 32 ms corresponding to 256 frames.

It should be understood that the above values for equipment an internal processing time are taken from a particular implementation and can be different for others. In general the buffer size is equipment specific and standard G.7041 allows a buffer size for the de-skewing buffer of up to 256 ms.

Due to frame measurement, the granularity is 125 us. Using an average light speed in medium of 0,2m/ns = 200m/$\mu$s this granularity compares to a line length of 25km. Since the line length is measured twice, the granularity of the measurement is 12,5 km of line length. The 20 $\mu$s latency due to equipment functions (T2, T6, T7, T4) is negligible in this context. With buffer capacity of 15ms corresponding to 120 frames, the total latency that can be measured is 2500 km. As line is measured twice the maximum tine length is 1250 km. With buffer capacity of 32 ms corresponding to 256 frames the total length is 6400 km and the maximum fine length can be 3200 km.

As the deskewing buffer is filled in linear way starting at buffer begin, in the cases of an overflow a "multi-cross" indicator may provide information how often the frame has been overflowed. When this function is available even much longer lines can be measured.

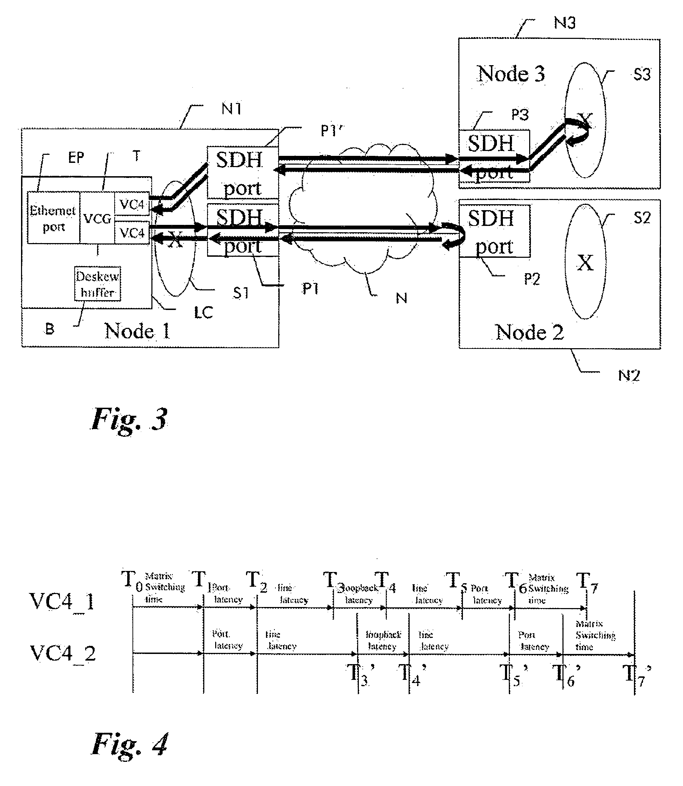

When the "multi-cross" indicator is not given a given line can be compared with another line already known, which will be described with reference to figure 3 in a second embodiment below.

The measurement is based on the availability of the cards on one side of the line which provide virtual concatenation functionality. The measurement further requires a free VCG on one card that can be used for measurement and it requires two VC4 on back-panel capacity in the same VCG. Instead of a free VCG, the Measurement can also be done using an existing VCG, which is currently in services, by simply adding two separate VC4 that are not in service. Such an existing VCG will then have two additional members that are not activated.

In order to perform the measurement, the following configuration steps will be carried out: At node N2, the line is configured. At node N1, the VCG at tributary line card LC is configured and the switching matrix S1 is configured to switch one member to the SGH port P1 under consideration and the one member back to tributary line card LC. Then the measurement can be carried out and finally, the switch is released again at switching matrix S1, the VCG configured back into original condition and the fine loopback ot node N2 released.

In order to support the above described measurement, a new maintenance command could preferably be defined that measures the differential delay between two members in a VCG.

The measurement can either be performed in a manual way in that the above configuration steps are performed by an operator manually, or the measurement can be automated by a single commend which executes the measurement steps. In this case the SDH port under consideration will be specified and optionally also the VCG group to be used can be specified.

Measurement can be done on an idle line when no active traffic is currently being sent, or on an line with active traffic but where some capacity is available for an additional VC4. In the former case, discovery may use line loopback since the port is not yet in service. For a measurement on a line with active traffic, it would be preferable to use matrix loopback.

The setup and measurement steps can be synchronized and coordinated through a control plane, e.g. by GMPLS controllers which communicate with each other. For example the Link Management Protocol LMP of the GMPLS protocol suit can be used to negotiating which side is measuring, initiate the line loopback or matrix loopback, and in case of matrix loopback which VC is used. Measurement can even be, done as a maintenance action during a link is in service by using matrix loopback in the far end network node N2.

Turning to figure 3, a second embodiment of tine latency measurement will now be described, which uses a second line with known latency characteristics to verify with the line-under consideration.

In this operation a test line is compared against a known line for example in cases where the multi-cross indication is not available. The setup changes in the following way: The first member of a concatenation group is switched to the known line. The second member is switched to the port under consideration. Either both peer ends of the two ports are placed into line loopback, when link is not in service or the VCG member can be locally switched back to the line in the switching matrix. The latter is the preferred option for the known port.

In figure 3, first network node N1 has a tributary line card LC, a first SDH port P1, and a second SDH port P1'. Via SDH network N, network node N1 is connected from SDH port P1 to SDH port P2 of network node N2 and from port P1' to port P3 of network node N3. For this embodiment, it is assumed that the latency of the link between node N1 and N3 is known.

Concatenation termination unit T creates as in the first embodiment a virtual concatenation group with two VC4s and spends these to switching matrix S1. The first VG4 is switched to SDH port P1' and the second to SDH port P1. The first VC is received at port P3 of network node N3 and forwarded to switching matrix S3, where it is looped back to SDH port P3. The first VC4 hence travels back through network to port P1', from where it is switched back to tributary line card LC. The second VC4 is received at port P2 of network node N2, which has activated a line loopback function and hence the VC4 is sent back via network N to port P1, from where it is switched back to tributary line card LC, too. Concatenation termination unit T using its deskewing buffer B determines the time difference between receipt of the two corresponding VC4.

The delta measured between the two lines must be taken into account together with the known latency of the known link. The delta can hence be negative or positive as long it is in the range of the buffer size.

Figure 4 shows a timing diagram of the measurement. At time T0, both VC4s VC4_1 and VC4_2 are sent from line card LC to switching matrix 51. After the switching latency, the VC4s are received at time $T_1$ at their respective SDH ports P1, P1'. Since the port latency is usually the same for different ports, both VC4s are transmitted simultaneously at time $T_2$ to their respective transmission lines.

VC_1 is received after time $T_3$ at port P3 and after lapse of a loopback latency, which is essentially the ingress and egress port latency plus the switching latency of switching matrix S3 (due to the fact that node N3 has activated matrix loopback), VC4_1 is transmitted at time $T_4$ back to the transmission line. At time $T_5$, it is received at port P1' and after adding port latency ($T_6$) and switching latency is received back at time $T_7$ at tributary line card LC.

VC4_2 is received after time $T_3$' at port P2 of network node N2. The loopback latency of port P2 is then added and VC4_2 is transmitted at time $T_4$' back to the transmission line: At time $T_5$' it is received at port P1 and after port latency and switching latency it is finally received back at the tributary line card LC at time $T_7$'. The measured latency is the difference between VC4_1 and VC4_2, i.e. the difference between $T_7$ and $T_7$'. With the known latency of the transmission line between N1 and N3, the latency of the transmission line under consideration can be easily determined.

The characteristics of the know transmission line can either be measured in advance using external measurement equipment or can be deduced using known geographical properties, It would also be possible that the known line is just a segment of the line to be measured or the other way round, that the line to be measured is a segment of the known line. The invention allows hence allows to measure a line and all its segments.

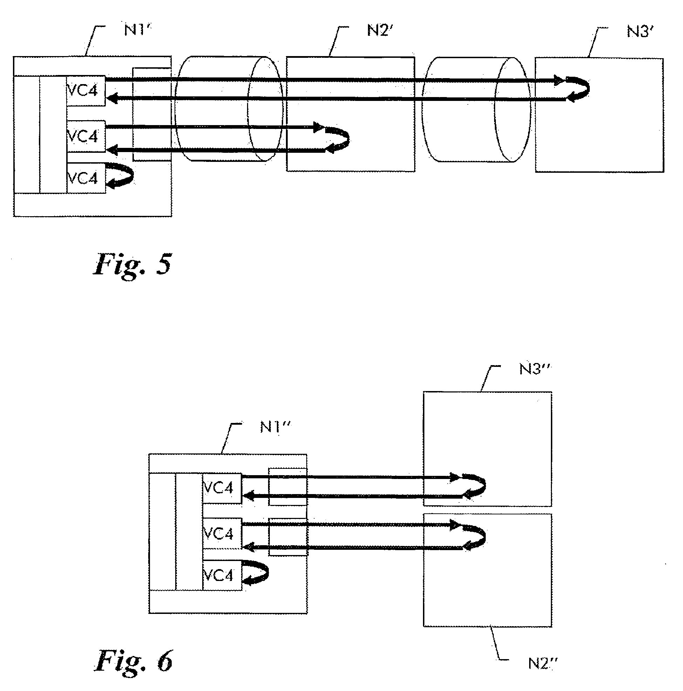

Figure 5 shows a third embodiment of a measurement. In this embodiment, a virtual concatenation of three VC4 is formed at a first network node N1'. The first element of the virtual concatenation is looped back locally. The second and third VC4 are transmitted via the same output port to a common optical line, which interconnects network element N1' via a second intermediate network element NE2' to a third network element NE3'. The second of the three VC4 is looped back at network node NE2' and the third of the three VC4 is looped back at network node NE3'. This way, using more than two element of a virtual concatenation, the line from NE1' to NE3' and the segment between NE1' and NE2' can be measured at the same time. Knowing the latency between NE1' and N2' and between NE1' and NE3', the latency of the segment between NE2' and NE3' can easily be calculated as the difference between the two. This approach can also be extended to a line with more than two segments using a concatenation of more than three VC4. It is hence possible to measure a line and all its segments in one step from a single place in the network.

Figure 6 shows yet a further embodiment. As in the before embodiment, a virtual concatenation of three VC4 is formed at a first network node. N1". The first element of the virtual concatenation is looped back locally. The second and third VC4 are transmitted via different output ports to two different Optical lines, which connect network element N1" to a second intermediate network element NE2" and to a third network element NE3", respectively. The respective VC4s are looped back at network nodes NE2' , NE3', respectively. This way, using more than two elements of a virtual concatenation at a time, the measurement of figure 1. can be performed in parallel to measure several different lines at the same time. This way, using a virtual concatenation of N elements, it will be possible to measure N- lines in parallel from a single point in the network.

In order to measure a higher number of lines and segments in parallel from a single point in the network, it could be advantageous to use smoker multiplex units where available to have an even higher umber of multiplex units available to form a virtual concatenation. It would be possible for example, to use the VC-3, which is the higher order multiplex unit in SONET (the ANSI equivalent of SDH), and form a virtual concatenation VC-3nv of n VC-3 and locally loop back the different VC-3s.

As already discussed above, the configuration steps necessary to carry out the invention can be implemented in either a control plane element if the SDH network is equipped with a distributed GMPLS control plane or can be implemented into a central network management system. In the former case, each network node has a GMPLS controller and the GMPLS controller of network node N1 is equipped with a software extension that configures upon execution the network node N 1 to perform the respective steps and is also capable to instruct the GMPLS controller of network node N2, respectively network nodes N2 and N3 to configure the loopback in either switching matrix or line card, depending on which alternative is chosen. Conversely, in the latter case, the central network management system is equipped with a software extension, which upon execution initiates the necessary configuration and measurement steps in all involved network nodes.

Those skilled in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalent thereof.

The above embodiments have been described in the context of networks and network equipment of the well known Synchronous Digital Hierarchy (SDH). However, similar mechanisms of virtual concatenation also exist for instance in the Optical Transport Network (OTN) and the above described measurement principles can equally be applied in these and other networks, which provide virtual concatenation of multiplexing units, in particular, in any kind of transport network which are based on circuit switching technology, time division multiplexing of multiplexing units of equal length, and which provide functionality equivalent to virtual concatenation as explained above. Moreover, underlying transport networks, which transports these concatenated TDM services, such as WDM networks, can be measured in the described way.

**Claims**

1.  A method of measuring the latency of a transport connection between a first network node (N1) and a second network node (N2), comprising the steps of:

- at said first network node (N1), creating a virtual concatenation group comprising at least two multiplexing units (VCG4_1, VC4_2);
- using a first of the multiplexing units (VC4_1) as reference for a latency measurement;
- sending a second of said multiplexing units (VC4_2) to the second network node (N2); and
- at said first network node, determining a latency difference between said first and second multiplexing units (VCG4_1, VC4_2) using a buffer (B) available in said first network node (N1) for re-aligning members of a virtual concatenation group,

**characterized in that**

- said second multiplexing unit (VC4_2) is looped back at said second network node to said first network node (N1) and
- said first multiplexing unit (VC4_1) is internally switched back to a line card, where the virtual concatenation group is terminated.

2. A method according to claim 1, wherein the latency of said transport connection to be measured is determined by subtracting a known equipment latency and dividing the remainder by 2.

3. A method according to claim 1, wherein said virtual concatenation group is an already existing virtual concatenation group to which said first and second multiplexing units (VCG4_1, VC4_2) are added as inactive members.

4. A method according to claim 1, wherein the measurement is performed during said transmission connection is in service and wherein the loopback is performed in a switching matrix (S2) of said second network node (N2).

5. A method according to claim 1, wherein the measurement is performed during said transmission connection is out of service and wherein the loopback is performed through a line loopback function at a receiving port (P2) of said second network node (N2).

6. A method according to claim 1, wherein said virtual concatenation group is created on a line card for packet services (LC) of said first network node (N1) and wherein said line card for packet services (LC) also contains said buffer (B) for re-aligning members of a virtual concatenation group.

7. A method according to claim 1, further comprising an indicator capable of counting overflow events of said buffer (B), and wherein for each buffer overflow, a fixed value is added to the determined latency difference, which value corresponds to the size of the buffer (B).

8. A method according to claim 1, wherein multiple multiplexing units of a virtual concatenation group are used to measure the latency of a line and one or more segments along that line by looping back different multiplexing units of said virtual concatenation group at intermediate network nodes.

9. A method according to claim 1, wherein multiple elements of a virtual concatenation group are used to measure the latency of multiple lines in parallel.

10. A controller of a distributed control plane controlling a first network node (N1), wherein said controller comprises a function for measuring the latency of a transport connection between the first network node (N1) and a second network node (N2) and wherein upon execution, said function configures said first network node (N1)

- to create a virtual concatenation group comprising at least two multiplexing units (VCG4_1, VC4_2);
- to use a first of the multiplexing units (VCG4_1) as reference for a latency measurement; and
- to send a second of said multiplexing units (VC4 2) to a second network node (N2);

wherein said function further instructs a second controller of said second network node (N2) to configure said second network node to loop said second multiplexing units (VC4_2) back to said first network node (N1) and wherein said function further configures said first network node (N1) to switch said first multiplexing unit (VC4_1) internally back to a line card, where the virtual concatenation group is terminated and to determine a latency difference between said first and second multiplexing units (VCG4_1, VC4_2) using a buffer available in said first network node (N1) for re-aligning members of a virtual concatenation group.

11. A controller according to claim 10, wherein said function makes use of a protocol of the Generalized Multi-Protocol Labels Switching protocol suite and in particular the Link Management Protocol to instruct said second controller.

12. A network management system comprising a maintenance function, which upon execution configures a first network element (N1) and a second network element (N2) to perform the steps of the method according to any of claims 1 to 10.

**Patentansprüche**

1. Verfahren zum Messen der Latenz einer Transportverbindung zwischen einem ersten Netzwerkknoten (N1) und einem zweiten Netzwerkknoten (N2), die folgenden Schritte umfassend:

   - An dem besagten ersten Netzwerkknoten (N1), Erstellen einer virtuellen Verknüpfungsgruppe mit mindestens zwei Multiplex-Einheiten (VC4_1, VC4_2);
   - Verwenden einer ersten der Multiplex-Einheiten (VCG4_1) als Referenz für eine Latenzmessung;
   - Senden einer zweiten der besagten Multiplex-Einheiten (VC4_2) an den zweiten Netzwerkknoten (N2); und
   - an dem besagten ersten Netzwerkknoten, Bestimmen einer Latenzdifferenz zwischen der besagten ersten und der besagten zweiten Multiplex-Einheit (VC4_1, VC4_2) unter Verwendung eines in dem besagten ersten Netzwerkknoten (N1) verfügbaren Puffers (B) zum Neuausrichten von Mitgliedern einer virtuellen Verknüpfungsgruppe,

   **dadurch gekennzeichnet, dass**

   - die besagte zweite Multiplex-Einheit (VC4_2) an dem besagten zweiten Netzwerkknoten an den besagten ersten Netzwerkknoten (N1) zurückgekoppelt wird, und
   - die besagte erste Multiplex-Einheit (VC4_1) intern an eine Leitungskarte zurückvermittelt wird, wo die virtuelle Verknüpfungsgruppe beendet ist.

2. Verfahren nach Anspruch 1, wobei die Latenz der besagten zu messenden Transportverbindung durch Subtrahieren einer bekannten Ausrüstungslatenz und Dividieren des Restes durch 2 bestimmt wird.

3. Verfahren nach Anspruch 1, wobei die virtuelle Verknüpfungsgruppe eine bereits bestehende virtuelle Verknüpfungsgruppe ist, zu welcher die besagte erste und die besagte zweite Multiplexeinheit (VCG4 1, VC4_2) als nicht aktive Mitglieder hinzugefügt werden.

4. Verfahren nach Anspruch 1, wobei die Messung ausgeführt wird, wenn die besagte Übertragungsverbindung in Betrieb ist, und wobei die Rückkopplung in einer Schaltmatrix (S2) des besagten zweiten Netzwerkknotens (N2) ausgeführt wird.

5. Verfahren nach Anspruch 1, wobei die Messung ausgeführt wird, wenn die besagte Übertragungsverbindung außer Betrieb ist, und wobei die Rückkopplung über eine Leitungsrückkopplungsfunktion an einem Empfangsport (P2) des besagten zweiten Netzwerkknotens (N2) ausgeführt wird.

6. Verfahren nach Anspruch 1, wobei die besagte virtuelle Verknüpfungsgruppe auf einer Leitungskarte für Paketdienste (LC) des besagten ersten Netzwerkknotens (N1) erstellt wird, und wobei die besagte Leitungskarte für Paketdienste (LC) ebenfalls den besagten Puffer (B) zum Neuausrichten von Mitgliedern einer virtuellen Verknüpfungsgruppe enthält.

7. Verfahren nach Anspruch 1, weiterhin umfassend einen Indikator, welcher für das Zählen von Überlaufereignissen des besagten Puffers (B) ausgelegt ist, und wobei für jeden Pufferüberlauf ein festgelegter Wert zu der bestimmten Latenzdifferenz hinzugefügt wird, welcher der Größe des Puffers (B) entspricht.

8. Verfahren nach Anspruch 1, wobei die mehrfachen Multiplex-Einheiten einer virtuellen Verknüpfungsgruppe verwendet werden, um die Latenz einer Leitung und eines oder mehrerer Segmente entlang dieser Leitung durch Rückkoppeln verschiedener Multiplex-Einheiten der besagten virtuellen Verknüpfungsgruppe an einen dazwischenliegenden Netzwerkknoten zu messen.

9. Verfahren nach Anspruch 1, wobei mehrfache Elemente einer virtuellen Verknüpfungsgruppe verwendet werden, um die Latenz von mehrfachen Leitungen gleichzeitig zu messen.

10. Steuerung einer verteilten Steuerungsebene zum Steuern eines ersten Netzwerkknotens (N1), wobei die besagte Steuerung eine Funktion zum Messen der Latenz einer Transportverbindung zwischen dem ersten Netzwerkknoten (N1) und einem zweiten Netzwerkknoten (N2) umfasst, und wobei die besagte Funktion bei deren Ausführung den besagten ersten Netzwerkknoten (N1) für die folgenden Schritte konfiguriert:

- Erstellen einer virtuellen Verknüpfungsgruppe mit mindestens zwei Multiplex-Einheiten (VC4_1, VC4 2);
- Verwenden einer ersten der Multiplex-Einheiten (VCG4_1) als Referenz für eine Latenzmessung; und
- Senden einer zweiten der besagten Multiplex-Einheiten (VC4-2) an einen zweiten Netzwerkknoten (N2);

wobei die besagte Funktion weiterhin einer zweiten Steuerung des besagten zweiten Netzwerkknotens (N2) befiehlt, den besagten zweiten Netzwerkknoten für das Rückkoppeln der besagten zweiten Multiplex-Einheiten (VC4_2) an den besagten ersten Netzwerkknoten (N1) zu konfigurieren, und wobei die besagte Funktion weiterhin den besagten ersten Netzwerkknoten (N1) für die interne Rückvermittlung der besagten ersten Multiplexeinheit (VC4_1) an eine Leitungskarte, wo die virtuelle Verknüpfungsgruppe beendet ist, und für das Bestimmen einer Latenzdifferenz zwischen der besagten ersten und der besagten zweiten Multiplex-Einheit (VC4_1, VC4_2) unter Verwendung eines in dem besagten ersten Netzwerkknoten (N1) verfügbaren Puffers zum Neuausrichten von Mitgliedern einer virtuellen Verknüpfungsgruppe konfiguriert.

11. Steuerung nach Anspruch 10, wobei die besagte Funktion ein Protokoll der Generalized Multi-Protocol Label Switching-Protokollreihe und insbesondere das Verbindungsverwaltungsprotokoll für die Anweisung der besagten zweiten Steuerung verwendet.

12. Netzwerkverwaltungssystem mit einer Wartungsfunktion, welche bei deren Ausführung ein erstes Netzwerkelement (N1) und ein zweites Netzwerkelement (N2) für das Ausführen der Schritte des Verfahrens nach einem beliebigen der Ansprüche 1 bis 10 konfiguriert.

**Revendications**

1. Procédé pour mesurer la latence d'une connexion de transport entre un premier noeud de réseau (N1) et un deuxième noeud de réseau (N2), comprenant les étapes suivantes :

- sur ledit premier noeud de réseau (N1), création d'un groupe de concaténation virtuel comprenant au moins deux unités de multiplexage (VC4_1, VC4_2) ;
- utilisation d'une première des unités de multiplexage (VCG4_1) comme référence pour une mesure de la latence ;
- envoi d'une deuxième desdites unités de multiplexage (VC4_2) au deuxième noeud de réseau (N2) ; et
- sur ledit premier noeud de réseau, détermination d'une différence de latence entre lesdites première et deuxième unités de multiplexage (VC4_1, VC4_2) en utilisant un tampon (B) disponible dans ledit premier noeud de réseau (N1) pour réaligner les membres d'un groupe de concaténation virtuel,

**caractérisé en ce que**

- ladite deuxième unité de multiplexage (VC4_2) est renvoyée audit deuxième noeud de réseau vers ledit premier noeud de réseau (N1) et
- ladite première unité de multiplexage (VC4_1) est commutée en interne vers une carte de ligne où se termine le groupe de concaténation virtuel.

2. Procédé selon la revendication 1, dans lequel la latence de ladite connexion de transport à mesurer est déterminée en soustrayant une latence d'équipement connue et en divisant le reste par 2.

3. Procédé selon la revendication 1, dans lequel ledit groupe de concaténation virtuel est un groupe de concaténation virtuel qui existe déjà auquel lesdites première et deuxième unités de multiplexage (VC4_1, VC4_2) sont ajoutées en tant que membres non actifs.

4. Procédé selon la revendication 1, dans lequel la mesure est réalisée pendant que ladite connexion de transmission est en service et dans lequel le rebouclage est effectué dans une matrice de commutation (S2) dudit deuxième noeud de réseau (N2).

5. Procédé selon la revendication 1, dans lequel la mesure est réalisée pendant que ladite connexion de transmission est hors service et dans lequel le rebouclage est effectué par le biais d'une fonction de rebouclage de ligne au niveau d'un port de réception (P2) dudit deuxième noeud de réseau (N2).

6. Procédé selon la revendication 1, dans lequel ledit groupe de concaténation virtuel est créé sur une carte de ligne pour des services en paquet (LC) dudit premier noeud de réseau (N1) et dans lequel ladite carte de ligne pour des services en paquet (LC) contient également ledit tampon (B) pour réaligner les membres d'un groupe de concaténation virtuel.

7. Procédé selon la revendication 1, comprenant en outre un indicateur capable de compter les événements de débordement dudit tampon (B) et dans lequel, pour chaque débordement du tampon, une valeur fixe est ajoutée à la différence de latence déterminée, ladite valeur correspondant à la taille du tampon (B).

8. Procédé selon la revendication 1, dans lequel plusieurs unités de multiplexage d'un groupe de concaténation virtuel sont utilisées pour mesurer la latence d'une ligne et d'un ou plusieurs segments le long de cette ligne en rebouclant différentes unités de multiplexage dudit groupe de concaténation virtuel au niveau des noeuds de réseau intermédiaires.

9. Procédé selon la revendication 1, dans lequel plusieurs éléments d'un groupe de concaténation virtuel sont utilisés pour mesurer la latence de plusieurs lignes en parallèle.

10. Contrôleur d'un plan de contrôle distribué commandant un premier noeud de réseau (N1), ledit contrôleur comprenant une fonction pour mesurer la latence d'une connexion de transport entre le premier noeud de réseau (N1) et un deuxième noeud de réseau (N2) et, lors de son exécution, ladite fonction configurant ledit premier noeud de réseau (N1)

    - pour créer un groupe de concaténation virtuel comprenant au moins deux unités de multiplexage (VCG4_1, VC4_2) ;
    - pour utiliser une première des unités de multiplexage (VC4_1) comme référence pour une mesure de la latence ; et
    - pour envoyer une deuxième desdites unités de multiplexage (VC4_2) à un deuxième noeud de réseau (N2) ;

dans lequel ladite fonction ordonne en outre à un deuxième contrôleur dudit deuxième noeud de réseau (N2) de configurer ledit deuxième noeud de réseau pour reboucler ladite deuxième unité de multiplexage (VC4_2) vers ledit premier noeud de réseau (N1) et dans lequel ladite fonction configure en outre ledit premier noeud de réseau (N1) pour commuter ladite première unité de multiplexage (VC4_1) en interne vers une carte de ligne où se termine le groupe de concaténation virtuel et pour déterminer une différence de latence entre lesdites première et deuxième unités de multiplexage (VCG4_1, VC4_2) en utilisant un tampon disponible dans ledit premier noeud de réseau (N1) pour réaligner les membres d'un groupe de concaténation virtuel.

11. Contrôleur selon la revendication 10, dans lequel ladite fonction utilise un protocole de la série des protocoles GMPLS (Generalized Multi-Protocol Labels Switching - Commutation multiprotocole avec étiquette généralisé), notamment le protocole LMP (Link Management Protocol - Protocole de gestion de ligne) pour adresser des commandes audit deuxième contrôleur.

12. Système de gestion de réseau comprenant une fonction de maintenance qui, lors de son exécution, configure un premier élément de réseau (N1) et un deuxième élément de réseau (N2) pour exécuter les étapes du procédé selon l'une quelconque des revendications 1 à 10.

*Fig. 1*

*Fig. 2*

**Fig. 3**

**Fig. 4**

**Fig. 5**

**Fig. 6**

**REFERENCES CITED IN THE DESCRIPTION**

**Patent documents cited in the description**

- US 20050265251 A
- WO 2004068750 A
- WO 0306339 A
- JP 2000033271 A
- US 6545979 B